# EUROPEAN PATENT SPECIFICATION

(11) **EP 2 326 451 B1**
(45) Date of publication and mention of the grant of the patent: **03.01.2018**
(21) Application number: 09784758.6
(22) Date of filing: 21.07.2009
(51) Int. Cl.: B23H 7/26, B23H 9/04

(54) **IMPROVED CONNECTOR FOR AN ELECTRICAL DISCHARGE MACHINE**
VERBESSERTER VERBINDER FÜR EINE FUNKENEROSIONSMASCHINE
CONNECTEUR AMÉLIORÉ POUR MACHINE D'USINAGE PAR ÉTINCELAGE

(30) Priority: 18.08.2008 GB 0815062
(43) Date of publication of application: 01.06.2011
(73) Proprietor: Sarclad Limited, Chesterfield S41 9RT (GB)
(72) Inventor: WYBROW, Mark, Chesterfield S41 9RT (GB)
(74) Representative: Fry, David John
(86) International application number: PCT/GB2009/001806
(87) International publication number: WO 2010/020743

(56) References cited:
- EP-A1- 1 629 921
- EP-A1- 1 820 593
- EP-A2- 0 304 235
- EP-A2- 1 402 985
- DE-U1- 20 320 098
- US-B1- 6 791 054

## Description

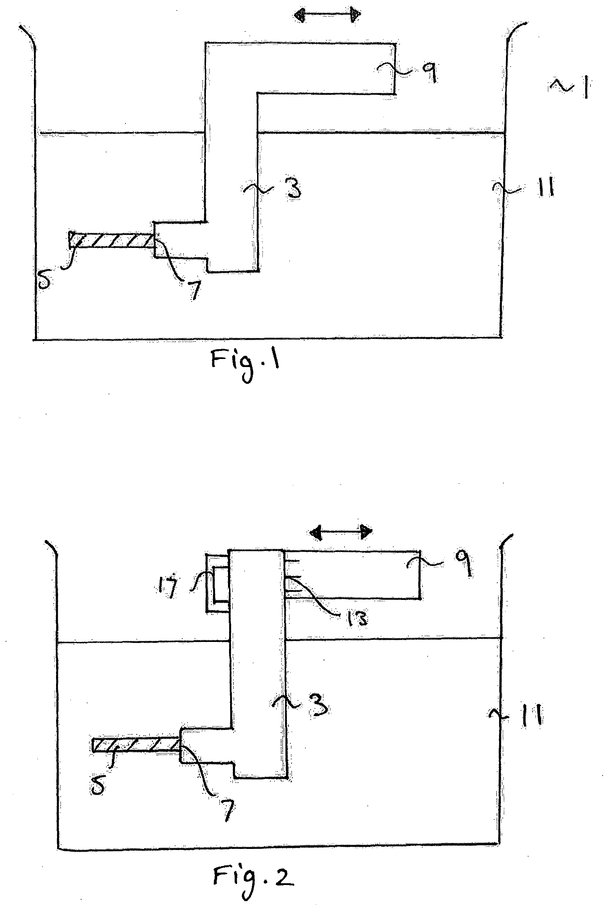

The present invention relates to apparatus for applying a textured or matt finish to a surface of a workpiece by an electrical discharge technique and more specifically to an improved connector between the servo motor and electrode of such apparatus. Existing apparatus for texturing steel rolls using electro-discharge such as disclosed in EP0304235A2 comprise a plurality of electrodes carried by a head, which is moved along a work roll. The electro-discharge technique relies on the work roll and the electrodes being immersed in dielectric fluid. The electrode head is controlled by a servo motor, which moves the electrodes towards and away from the work roll to control the gap between the electrode and the work roll. A typical arrangement of an electrode and servo motor with respect to the dielectric bath is shown in Figure 1. The servo motor is positioned above the level of the dielectric fluid in the bath and is connected to an electrode (or a holder of an electrode array) below the level of the dielectric fluid by a "drop arm". The "drop arm" is fixed to the servo motor and extends perpendicular to the level of the dielectric fluid. An electrode or the head of an electrode array is connected to the "drop arm" via a socket, which is also below the level of the dielectric fluid.

Several disadvantages are associated with the existing "drop arm" arrangement. It has been found that the position of the electrode socket, which is below the level of dielectric fluid, is difficult to access. The difficulty in accessing electrodes is such that connection or replacement of the electrodes by an operator is very time consuming. Furthermore, the operator is placed at risk because they are potentially connecting the electrode to a live connection. In addition, the fixed position of the "drop arm" within the bath restricts access to the bath for cleaning, inspection and maintenance. It has also been found that if the electrode is too loosely connected and too easily removed from the connector, dielectric fluid and debris can enter the connector.

The present invention sets out to provide an improved arrangement for electrical discharge apparatus which alleviates the problems described above by providing an improved connector.

In one aspect, the invention provides an electro-discharge apparatus as claimed in claim 1. By removeably connecting the electrode support means to the servo-control means, the replacement of electrodes can be carried out away from the apparatus. This reduces the difficulty of changing the electrodes within a confined space and allows for more accurate and secure attachment of the electrodes to the support. The support means can also be removed to allow for cleaning, inspection or maintenance of the apparatus.

Within the context of this specification the word "comprises" is taken to mean "includes, among other things". It is not intended to be construed as "consists of only".

Preferably, the electrode attachment means comprises at least resiliently biased socket. The resiliently biased socket holds the or each electrode securely and holds the electrode in a secure position without allowing loose debris or dielectric fluid to enter the socket.

Preferably, the electrode support means further comprises a handle.

A handle allows for ease of removal and insertion of the electrode support means out of and into the apparatus.

For the purposes of clarity and a concise description, features are described herein as part of the same or separate embodiments; however it will be appreciated that the scope of the invention may include embodiments having combinations of all or some of the features described.

The invention will now be described by way of example with reference to the accompanying diagrammatic drawings, in which :-
Figure 1 is a schematic view of an existing drop arm arrangement; and
Figure 2 is a schematic view of a drop arm arrangement constructed in accordance with the present invention; and
Figure 3 is an enlarged view of the connection between the servo motor and the drop arm of the arrangement of Figure 2.

Figure 1 shows an existing arrangement of electro-discharge apparatus 1 comprising a drop arm 3 and an electrode 5. The electrode 5 is connected by an electrical socket 7 to one end of the drop arm 3. For the purposes of this example, only one electrode is referred to. However, it is envisaged that the drop arm 3 could be connected to a multiple electrode array. The socket 7 comprises a tubular aperture to receive the cylindrical electrode 5. A resiliently biased means, such as a spring, within the socket 7 exerts a force onto the electrode 5 when the electrode is inserted. It is envisaged that the socket/electrode arrangement could comprise any female/male connection means.

The electrode 5 and the adjacent surface of a work roll (not shown) are totally immersed in a bath of dielectric fluid 11. The electrode 5 is connected to the drop arm 3 below the level of the dielectric fluid 11. The distal end of the drop arm 3, above the level of the dielectric fluid 11, is fixed to a servo motor 9. The drop arm 3 is bolted to a sliding mechanism and connected to the servo motor 9 via plastic bushes.

With the electrode 5 connected to the servo motor 9 via the drop arm 3, the servo-motor 9 moves the drop arm 3 and so the electrode 5 in the directions shown by the arrow. The servo motor moves the electrode 5 towards and away from the work roll surface. When a voltage is first applied to the electrode 5 an open circuit condition exits and no current flows. The servo motor 9 then drives the electrode 5 towards the roll surface and, as the gap between the electrode 5 and the work roll surface reduces, the breakdown voltage of the dielectric fluid 11 is reached and sparks flow between the electrode 5 and the work roll surface. Repetitive discharges are used to increase the surface temperature of the work roll to cause small areas of the work roll surface to melt to produce minute craters on the roll surface. To achieve the required conditions for sparking and consequently texturing to occur, the gap between the electrode 5 and the work roll is controlled.

After repeated use the electrode 5 becomes worn down. The "push fit" electrode 5 is removed and replaced from the socket 7 by manipulating the electrode 5 through the front wall of the bath of dielectric fluid 11. The servo motor 9 is used to advance the drop arm 3 to the front of the bath 1 and, with the apparatus off-line, the electrode 5 is removed and a replacement electrode Is pushed into the socket 7.

Referring to Figure 2, showing an embodiment of the present invention, in use an electrode 5 is connected to a drop arm 3 by a male/female push-fit electrical socket 7, which is below the level of the dielectric fluid 11. The drop arm 3 is connected to the servo motor 9 at a connection point 13. The connection point 13 is above the level of the dielectric fluid 11.

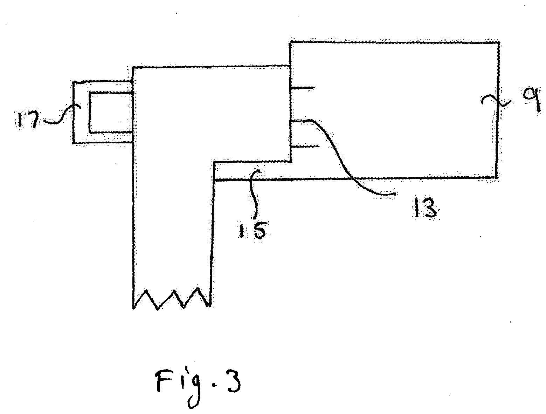

The connection point 13 comprises electrical connectors and a latch which are used to connect and disconnect the drop arm 3 from the servo motor 9. As shown in Figure 3, the servo motor comprises a protrusion or lip 15 of which the drop arm 3 rests. The drop arm 3 further comprises a handle 17, which is used when removing and immersing the drop arm 3 from the dielectric bath 11.

Before use, the drop arm 3 is disconnected from the servo motor 9 at connection point 13. Using the handle 17, the drop arm 3 is then lifted from the bath 11 and taken to a work station. The operator then inserts the electrode 5 into the electrical socket 7 of the drop arm 3. After the electrode is replaced, the electrode is then "bedded in" using the above-described electro-discharge technique, which is carried out on a work roll. The work roll is discarded once the electrode 5 is in the required condition. For example, the electrode's length may be reduced.

The drop arm 3 with the newly replaced electrode 5 is immersed into the dielectric bath 11 using the handle 17. The drop arm 3 is then removeably connected to the servo-motor 9 at connection point 13 and locked into position. With the drop arm 3 connected to the servo motor 9, the drop arm 3 is moveable by the servo motor 9 in the directions shown by an arrow. The servo motor 9 moves the electrode 5 towards and away from a work roll surface (not shown) and, as the gap between the electrode 5 and the work roll surface reduces, the breakdown voltage of the dielectric fluid 11 is reached and sparks flow between the electrode 5 and the work roll surface. Repetitive discharges are used to texture the roll as described above.

After use, as described above, to change the electrode 5, the drop arm 3 is disconnected from the servo motor 9 at connection point 13. The electrode 5 and the drop arm 3 are removed from the bath and from the dielectric fluid 11 and the electrode is replaced. It is envisaged that when the drop arm is removed, a replacement drop arm is immersed to allow the apparatus 1 to be worked continuously. Alternatively, to allow cleaning, inspection or maintenance of the bath, the drop arm 3 can be removed.

The above described embodiment has been given by way of example only, and the skilled reader will naturally appreciate that many variations could be made thereto without departing from the scope of the present invention as set out in the appended claims.

## Claims

1. An electro-discharge apparatus for producing a textured or matt finish on the surface of an electrically conductive work piece submerged in a bath of dielectric fluid, the apparatus comprising a drop arm (3) which includes at one end an electrical socket (7) to which an electrode (5) which is to be totally immersed in the bath of dielectric fluid can be connected, and which is connected at its other end which, in use of the apparatus, is positioned above the surface of the bath of dielectric fluid to a servo motor (9) which operates to move the drop arm and an electrode, when fitted, towards and away from a work piece whose surface is to be treated, the apparatus being **characterised in that** the drop arm (3) is releasably connected to the servo motor (9) at a connection point which is above the intended level of the bath of dielectric fluid in the apparatus and which comprises electrical connectors and a latch whereby the drop arm (3) with an electrode attached can be removed from the electro-discharge apparatus.

2. An electro-discharge apparatus as claimed in claim 1 **characterised in that** the electrical socket (7) is resiliently biased.

3. An electro-discharge apparatus as claimed in claim 1 or claim 2 **characterised in that** the drop arm (3) includes a handle (17) at its connection to the sero-motor (9) to assist removal of the drop arm from the servo-motor.

4. An electro-discharge apparatus as claimed in any one of claims 1 to 3 **characterised in that** the servo-motor (9) includes a lip (15) on which the end of the drop arm (3) is supported.

## Patentansprüche

1. Funkenerosionsvorrichtung zum Produzieren eines Struktur- oder Mattlacks auf der Oberfläche eines elektrisch leitenden Werkstücks, das in ein Bad eines dielektrischen Fluids getaucht ist, wobei die Vorrichtung einen Senkarm (3) umfasst, der an einem Ende eine elektrische Steckbuchse (7) beinhaltet, an dem eine Elektrode (5), die vollständig in das Bad des dielektrischen Fluids eingetaucht werden soll, verbunden sein kann, und der an seinem anderen Ende, das bei Gebrauch der Vorrichtung über der Oberfläche des Bads des dielektrischen Fluids positioniert ist, mit einem Stellmotor (9) verbunden ist, der betrieben wird, um, wenn er angebracht ist, den Senkarm und eine Elektrode zum und weg von dem Werkstück zu bewegen, dessen Oberfläche behandelt werden soll, wobei die Vorrichtung **dadurch gekennzeichnet ist, dass** der Senkarm (3) lösbar an einem Verbindungspunkt, der sich oberhalb der vorgesehenen Höhe des Bads des dielektrischen Fluids in der Vorrichtung befindet und elektrische Verbinder und einen Verschluss umfasst, mit dem Stellmotor (9) verbunden ist, wodurch der Senkarm (3) mit einer daran befestigten Elektrode von der Funkenerosionsvorrichtung entfernt werden kann.

2. Funkenerosionsvorrichtung nach Anspruch 1, **dadurch gekennzeichnet, dass** die elektrische Steckbuchse (7) federnd vorgespannt ist.

3. Funkenerosionsvorrichtung nach Anspruch 1 oder Anspruch 2, **dadurch gekennzeichnet, dass** der Senkarm (3) einen Griff (17) an seiner Verbindung mit dem Stellmotor (9) beinhaltet, der das Entfernen des Senkarms von dem Stellmotor unterstützt.

4. Funkenerosionsvorrichtung nach einem der Ansprüche 1 bis 3, **dadurch gekennzeichnet, dass** der Stellmotor (9) eine Lippe (15) beinhaltet, die das Ende des Senkarms (3) stützt.

## Revendications

1. Appareil d'usinage par étincelage destiné à produire un fini texturé ou mat sur la surface d'une pièce à travailler électroconductrice immergée dans un bain de liquide diélectrique, ledit appareil comprenant un bras pendant (3) qui comprend au niveau d'une extrémité une prise électrique (7) à laquelle une électrode (5) qui doit être totalement immergée dans le bain de liquide diélectrique peut être raccordée, et qui est raccordée au niveau de son autre extrémité qui, lors de l'utilisation de l'appareil, se positionne au-dessus de la surface du bain de liquide diélectrique, à un servomoteur (9) utilisé pour déplacer le bras pendant et une électrode, lorsqu'ils sont en place, en direction et à l'opposé d'une pièce à travailler dont la surface est à traiter, ledit appareil étant **caractérisé en ce que** le bras pendant (3) est raccordé de manière libérable au servomoteur (9) au niveau d'un point de raccord qui est au-dessus du niveau prévu du bain de liquide diélectrique, dans l'appareil et qui comprend des connecteurs électriques et un verrou grâce auquel le bras pendant (3) avec une électrode fixée peut être retiré de l'appareil d'usinage par étincelage.

2. Appareil d'usinage par étincelage selon la revendication 1, **caractérisé en ce que** la prise électrique (7) est sollicitée élastiquement.

3. Appareil d'usinage par étincelage selon la revendication 1 ou 2, **caractérisé en ce que** le bras pendant (3) comprend une poignée (17) au niveau de son raccord au servomoteur (9) afin de faciliter le retrait du bras pendant du servomoteur.

4. Appareil d'usinage par étincelage selon l'une quelconque des revendications 1 à 3, **caractérisé en ce que** le servomoteur (9) comprend une lèvre (15) sur laquelle repose l'extrémité du bras pendant (3).
